# EUROPÄISCHE PATENTANMELDUNG

(11) **EP 0 669 520 A1**
(43) Veröffentlichungstag der Anmeldung: **30.08.1995**
(21) Anmeldenummer: 95100753.3
(22) Anmeldetag: 20.01.1995
(51) Int. Cl.: G01F 1/08, G01F 1/12, G01F 1/06, G01F 7/00

(54) **Volumendurchflussmesser**

(30) Priorität: 02.02.1994 DE 4403178
(71) Anmelder: Hydrometer GmbH, D-91522 Ansbach (DE)
(72) Erfinder: Ziegler, Horst, Prof. Dr., D-33100 Paderborn (DE)
(74) Vertreter: Matschkur, Götz, Lindner Patent- und Rechtsanwälte

(57) **Zusammenfassung**

Um bei einem Volumendurchflußmesser das Anlaufen des Flügelrades (22) bei kleinen Durchsätzen zu erleichtern, ist im Einlaßkanal (14) des Gehäuses ein bewegbares Steuerelement (38) vorgesehen, welches zum Messen großer Durchsätze eine bündig mit einer Wand des Einlaßkanales (14) fluchtende Ruhestellung und zum Messen kleiner Durchsätze eine in den Einlaßkanal (14) ragende Drosselstellung einnimmt. Ein Diskriminator (50) steuert das Verstellen des Steuerelementes (38) in Abhängigkeit davon, ob der momentan gemessene Durchsatz unter einem vorgegebenen Schwellwert liegt.

## Beschreibung

Die Erfindung betrifft einen Volumendurchflußmesser gemäß dem Oberbegriff des Anspruches 1 bzw. 2.

Ein derartiger Volumendurchflußmesser ist in der DE 36 00 742 C2 beschrieben. Er hat über einen sehr großen Durchflußbereich hinweg konstantes Auflösungsvermögen.

Auch bei einem derartigen Volumendurchflußmesser verbleibt aber noch das Problem, daß dann, wenn der Durchfluß durch Abschalten aller nachgeschalteten Verbraucher vollständig abgeschaltet wurde und anschließend ein nur sehr geringe Flüssigkeitsmengen verbrauchender Verbraucher angeschaltet wird, das Flügelrad aufgrund der Lagerhemmung nicht oder erst verspätet anläuft.

Durch die vorliegende Erfindung soll ein Volumendurchflußmesser gemäß dem Oberbegriff des Anspruches 1 so weitergebildet werden, daß das Anlaufen des Flügelrades bei sehr kleinen Durchsätzen verbessert ist.

Diese Aufgabe ist erfindungsgemäß gelöst durch einen Volumendurchflußmesser gemäß Anspruch 1 bzw. Anspruch 2.

Den erfindungsgemäßen Lösungen ist gemeinsam, daß man für kleine Durchsätze den Durchströmquerschnitt des Einlaßkanales vermindert, so daß die zu messende Flüssigkeit mit erhöhter Geschwindigkeit auf das Flügelrad auftrifft und dieses somit besser in Bewegung versetzen kann. Bei einem Volumendurchflußmesser gemäß Anspruch 1 erfolgt das Steuern des bewegbaren Steuerelementes in Abhängigkeit vom Ausgangssignal des mit dem Flügelrad zusammenarbeitenden Stellungsgebers unter Verwendung von elektronischen Schaltkreisen. Bei der im Anspruch 2 angegebenen Lösung erfolgt das Steuern des bewegbaren Steuerelementes ausgehend von einem für den Durchsatz charakteristischen Druckabfall im Volumendurchflußmesser unter Verwendung von fluidischen Bauelementen.

Vorteilhafte Weiterbildungen der Erfindung sind in Unteransprüchen angegeben.

Bei einem Volumendurchflußmesser gemäß Anspruch 3 hat man für kleine Durchsätze präzis vorgegebene Strömungsverhältnisse und ein besonders scharfes Anströmen des Flügelrades durch den schmalen Flüssigkeitsstrahl, der von kleinen Durchmesser aufweisenden Niederdurchsatzzweig des Einlaßkanales abgegeben wird.

Bei einen Volumendurchflußmesser gemäß Anspruch 4 hat man in der Ruhestellung des bewegbaren Steuerelementes die gleiche glatt durchgehende Geometrie des Einlaßkanales wie bei einem herkömmlichcn Volumendurchflußmesser.

Die Weiterbildung der Erfindung gemäß Anspruch 5 ist im Hinblick auf eine mechanisch einfache Gestaltung des bewegbaren Steuerelementes bei großem Unterschied der Querschnitte des Einlaßkanales in der Ruhestellung und der Drosselstellung des Steuerelementes von Vorteil.

Die Weiterbildung der Erfindung gemäß Anspruch 6 hat den Vorteil, daß für das bewegbare Steuerelement keine Lagerreibung zu überwinden ist, so daß das Steuerelement auch nach langem Einsatz des Volumendurchflußmessers und unbeeinträchtigt durch Verunreinigungen zuverlässig arbeitet.

Die Weiterbildung der Erfindung gemäß Anspruch 7 ist wieder im Hinblick auf möglichst großen Unterschied des Durchströmquerschnittes des Einlaßkanales in den beiden Stellungen des bewegbaren Steuerelementes von Vorteil. Aufgrund der symmetrischen Anordnung der beiden Steuerelemente hat man auch keine auf das Betätigungsteil ausgeübte Kippmomente.

Die Weiterbildung der Erfindung gemäß Anspruch 8 ist im Hinblick auf ein leichtes unbehindertes Ausknicken der blattfederähnlichen Steuerelemente von Vorteil.

Verwendet man ein gummielastisches Steuerelement, wie es im Anspruch 9 angegeben ist, so kann man dem Einlaßkanal - wie bisher üblich - auch gut kreisförmigen Querschnitt geben. Darüber hinaus ist ein gummielastisches Steuerelement im Hinblick auf das Vermeiden von Lagerhemmung genauso vorteilhaft wie blattfederähnliche Steuerelemente, und ein gummielastisches Steuerelement ist auch im Hinblick auf Unempfindlichkeit gegenüber Verunreinigungen von Vorteil.

Auch mit der Weiterbildung der Erfindung gemäß Anspruch 10 ist es möglich, den Durchflußquerschnitt des Einlaßkanales in weiten Grenzen zu ändern.

Dabei wird mit der Weiterbildung der Erfindung gemäß Anspruch 11 erreicht, daß in der Drosselstellung der bewegbaren Steuerscheibe ein oder mehrere scharfe Flüssigkeitsstrahlen gegen das Flügelrad gerichtet werden.

Mit der Weiterbildung der Erfindung gemäß Anspruch 12 wird die zum Umstellen des Steuerelementes notwendige Energie zum größten Teil der in der anstehenden zu messenden Flüssigkeit enthaltenen potentiellen Energie entnommen.

Die Weiterbildung der Erfindung gemäß Anspruch 13 ist im Hinblick auf eine zuverlässige und einfache Abdichtung des mit dem bewegbaren Steuerelement ausgerüsteten Einlaßkanales von Vorteil.

Gemäß Anspruch 14 vermeidet man Regelschwingungen beim Umschalten der Geometrie des Einlasskanales.

Mit der Weiterbildung der Erfindung gemäß Anspruch 15 wird erreicht, daß die im Fensterbereich des Diskriminators anfallenden Meßwerte im wesentlichen gleich sind, egal von welcher Richtung her das Fenster erreicht wurde.

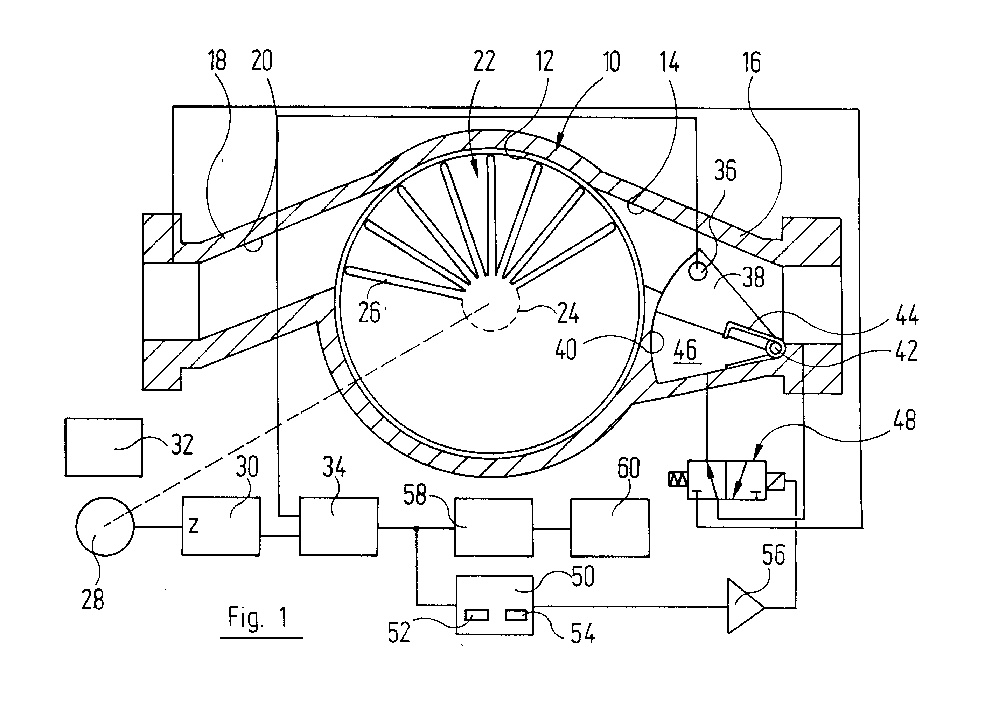

Nachstehend wird die Erfindung anhand von Ausführungsbeispielen unter Bezugnahme auf die Zeichnung näher erläutert. In dieser zeigen:
Figur 1:
   einen schematischen Schnitt durch einen Flügelrad-Volumendurchflußmesser sowie ein Blockschaltbild einer dazugehörigen Betriebsschaltung;
Figuren 2 bis 5:
   schematische Darstellungen von abgewandelten steuerbaren Drosseleinheiten, die im Einlaßkanal des Volumendurchflußmessers nach Figur 1 alternativ verwendbar sind; und
Figuren 6 und 7:
   ähnliche Darstellungen wie Figur 1, in welchen abgewandelte Volumendurchflußmesser wiedergegeben sind.

Der in Figur 1 wiedergegebene Volumendurchflußmesser hat ein insgesamt mit 10 bezeichnetes Gehäuse, in welchem eine zylindrische Meßkammer 12 ausgebildet ist. Zu dieser führt im wesentlichen tangential ein Einlaßkanal 14, der in einem einlaßseitigen Anschlußstutzen 16 vorgesehen ist. Ein gegenüberliegender auslaßseitiger Anschlußstutzen 18 begrenzt einen zum Einlaßkanal 14 bezüglich der in Figur 1 vertikalen Mittelebene im wesentlichen symmetrischen, also im wesentlichen tangential von der Meßkammer 12 ausgehenden Auslaßkanal 20.

In der Meßkammer 12 läuft ein insgesamt mit 22 bezeichnetes Flügelrad um, welches eine Welle 24 und Flügel 26 aufweist.

Mit der Welle 24 ist ein insgesamt mit 28 bezeichneter Stellungsgeber 28 gekoppelt, der in seinen baulichen Einzelheiten und bezüglich der Signal-Auswertung dem in der DE 36 00 742 C2 beschriebenen Flügelrad-Stellungsgeber entspricht. Zur Vermeidung von Wiederholungen wird diesbezüglich explizit auf diese Druckschrift verwiesen. Für die Zwecke der Erläuterung sei angenommen, daß der Stellungsgeber 28 zugleich Signalformkreise erhält und für jede Drehung des Flügelrades 22 um ein vorgegebenes Winkelinkrement einen Zählimpuls bereitstellt. Die beim Weiterdrehen des Flügelrades 22 um ein solches Winkelinkrement durch den Volumendurchflußmesser fließende Flüssigkeitsmenge wird nachstehend und in den Ansprüchen auch als Elementarvolumen bezeichnet. Dieses Elementarvolumen hängt in der Praxis von der Drehgeschwindigkeit des Flügelrades 22 ab.

Die vom Stellungsgeber 28 bereitgestellten Zählimpulse werden auf die Zählklemme Z eines quasilogarithmischen Zählers 30 gegeben.

Der Zähler 30 wird durch einen freilaufenden Taktgeber 32 in regelmäßigen Abständen auf Null zurückgesetzt.

Der Taktgeber 32 steuert auch das Auslesen von Signalen aus einem Festwertspeicher 34. Die Adressierung des Festwertspeichers 34 erfolgt zu einem Teil der Adresse durch den Zählerstand des Zählers 30 und zum anderen Teil in Abhängigkeit vom Ausgangssignal eines Lagefühlers 36.

Der Lagefühler 36 arbeitet mit einem kreissektorförmigen Steuerelement 38 zusammen, welches dicht in einer im Anschlußstutzen 16 vorgesehenen ebenfalls kreissektorförmigen Kammer 40 verschwenkbar ist, wozu das Steuerelement 38 Lagerzapfen 42 aufweist, die bei seinem stromaufseitigen schmalen Ende liegen. Durch eine Drahtbügelfeder 44 ist das Steuerelement 38 in die in der Zeichnung wiedergegebene Stellung vorgespannt, in welcher es über die Innenwand des Einlaßkanales 14 übersteht und so den Durchströmquerschnitt des letzteren vermindert. In dieser Drosselstellung ist ein hinter dem Steuerelement 38 liegender Arbeitsraum 46 über ein 3/2-Magnetventil 48 mit dem Einlaß des Volumendurchflußmessers verbunden, so daß das Steuerelement 38 druckausgeglichen ist und unter der Kraft der Drahtbügelfeder 44 die in der Zeichnung wiedergegebene Stellung einnimmt. Die in der Zeichnung wiedergegebene entsprechende Stellung des Magnetventiles 48 wird unter Federvorspannung eingenommen.

Wie im einzelnen ebenfalls der DE 36 00 742 C2 zu entnehmen ist, enthält der Festwertspeicher 34 diejenigen Elementarvolumina, die den Zählerständen des Zählers 30 zuzuordnen sind, wobei der Festwertspeicher 34 zwei Kennlinienfelder umfaßt, die jeweils gemäß dem Ausgangssignal des Lagefühlers 36 ausgewählt werden. Die beiden Kennlinienfelder überlappen sich und entsprechen dem Betrieb des Volumendurchflußmessers bei ausgefahrenem Steuerelement 38 (Bereich für kleine Durchsätze) bzw. eingefahrenem Steuerelement 38 (Bereich für große Durchsätze).

Zum Umsteuern des Magnetventiles 48 in seine Arbeitstellung wird das Ausgangssignal des Festwertspeichers 34 auf einen Diskriminator 50 gegeben, der prüft, ob die momentane, aus dem Ausgangssignal des Festwertspeichers 34 erkennbare Drehgeschwindigkeit des Flügelrades 22 größer als eine obere Schaltschwelle oder kleiner als eine untere Schaltschwelle ist. Für die Zwecke der Erläuterung sei angenommen, daß die beiden Schaltschwellen durch den Diskriminator 50 zugeordnete DIL-Schalterbänke 52, 54 einstellbar sind.

Der Diskriminator 50 arbeitet so, daß der dann, wenn das Ausgangssignal des Festwertspeichers 34 die obere Schaltschwelle überschreitet, ein hochpegeliges Ausgangssignal bereitstellt, welches über einen Verstärker 56 zur Ansteuerung des Magnetventiles 48 dient. In dieser Arbeitsstellung des Magnetventiles 48 wird dann der Arbeitsraum 46 mit dem Auslaßkanal 20 des Gehäuses 10 verbunden, wodurch das Steuerelement 48 nun differenzdruckbeaufschlagt ist. Da die Drahtbügelfeder 44 nur schwach ist, wird durch die Differenzdruckbeaufschlagung das Steuerelement 38 so verschwenkt, daß seine in der Zeichnung oben rechts liegende Seitenfläche bündig in der unteren Wand des Einlaßkanales 14 sitzt. Nach diesem Verschwenken des Steuerelementes 38 erzeugt dann der Lagefühler 36 kein Ausgangssignal mehr, so daß beim Auslesen des Festwertspeichers 34 nun das andere, für große Durchsätze geltende Kennlinienfeld verwendet wird.

Diese Arbeitsbedingungen werden erst dann wieder verlassen, wenn der Durchsatz des Volumendurchflußmessers unter den vorgegebenen unteren Schwellwert des Diskriminators 50 fällt. Der Diskriminator 50 beendet dann sein hochpegeliges Ausgangssignal, so daß das Magnetventil 48 wieder in die in der Zeichnung wiedergegebene Stellung zurückkehrt. Das Steuerelement 38 wird hierauf wieder ausgefahren, und für die anschließende Messung kleiner Durchsätze hat man dann im Einlaßkanal 14 wieder eine andere Strömungsgeometrie, mit welcher man eine höhere Strahlgeschwindigkeit der Flüssigkeit erhält, was das Anlaufen des Flügelrades 22 begünstigt.

Wie in Figur 1 dargestellt, kann an den Auslaß des Festwertspeichers 34 ein digitaler Integrator 58 angeschlossen sein, an dessen Ausgang man somit ein der Gesamtmenge durch den Volumendurchflußmesser geströmter Flüssigkeit zugeordnetes Signal erhält. Dieses kann auf einer Anzeigeeinheit 60 dargestellt werden.

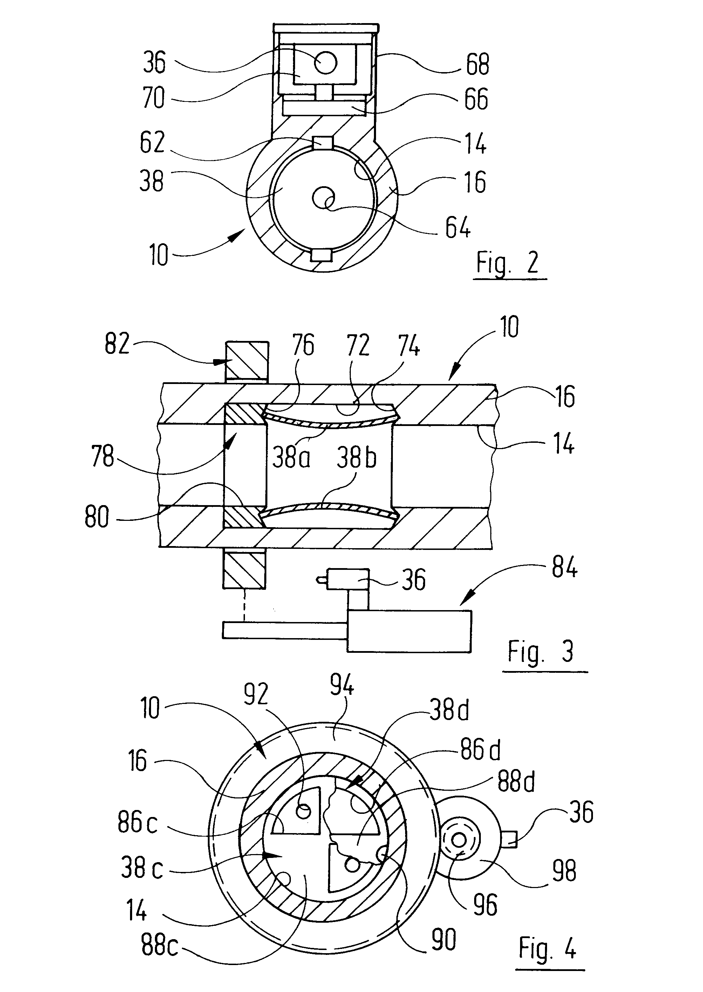

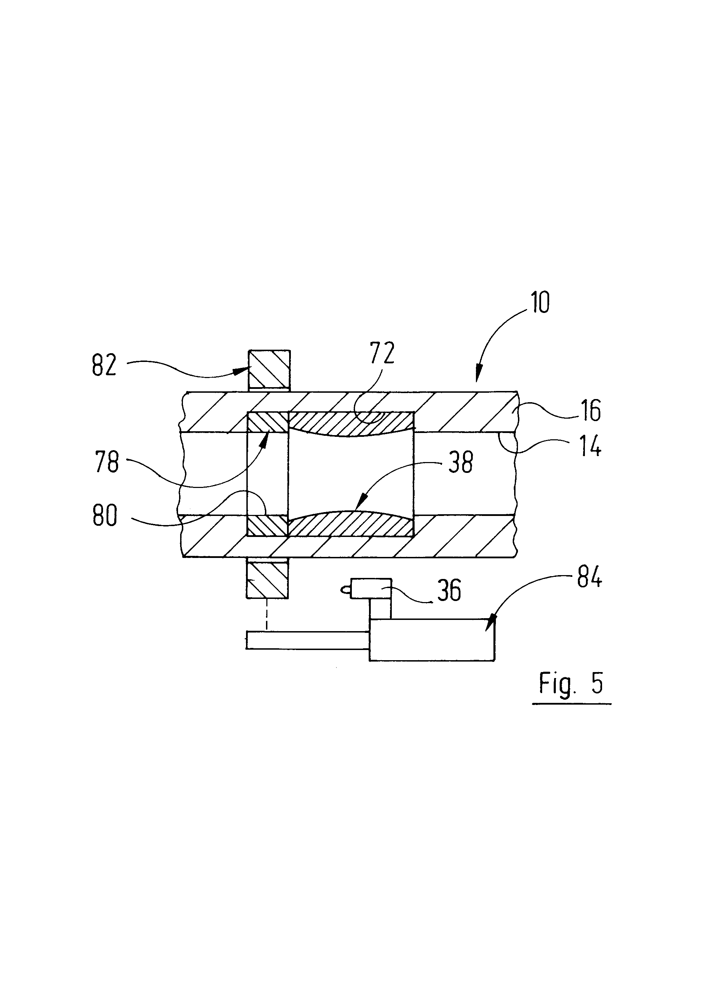

Bei der in Figur 2 gezeigten Variante hat das Steuerelement 38 die Form einer dünnen Scheibe, die über Lagerzapfen 52 an Anschlußstutzen 16 gelagert ist. Das Steuerelement 38 nach Figur 2 hat in der Mitte eine Drosselöffnung 64. Das Steuerelement 38 ist nun aus magnetischem Material hergestellt und befindet sich im Feld eines Antriebsmagneten 66, der in einem Ansatz 68 des Anschlußstutzens 16 drehbar ist. Die Magnetisierungen von Steuerelement 38 und Antriebsmagnet 66 sind so aufeinander abgestimmt, daß ein Drehmomentübertragung vom Antriebsmagneten 66 auf das Steuerelement 38 erhalten wird. Der Antriebsmagnet 66 wird seinerseits durch einen Elektromotor 70 bewegt, der vom Diskriminator 50 ähnlich angesteuert wird wie das Magnetventil 48. Der Einfachheit halber ist der Lagefühler 36 dem Elektromotor 70 zugeordnet.

Beim Ausführungsbeispiel nach Figur 3 besteht das Steuerelement aus zwei blattfederähnlichen Steuerlamellen 38a und 38b, die jeweils in einer seitlichen Erweiterung 72 des Einlaßkanales 14 angeordnet sind. Das eine Ende der Steuerlamellen 38a, 38b ist an einer dreieckigen Querschnitt aufweisenden Nut 74 abgestützt, die beim in Figur 3 rechtsgelegenen Ende der Erweiterung 73 liegt. Die linksgelegenen Enden der Steuerlamellen 38a, 38b sitzen in ebenfalls dreieckigen Querschnitt aufweisenden Nuten 76, die in der rechtsgelegenen Stirnfläche eines Betätigungsteiles 78 vorgesehen sind, welches axial verschiebbar in den Erweiterungen 72 angeordnet ist und eine zum Einlaßkanal 14 bündige Durchgangsöffnung 80 aufweist.

Das Betätigungsteil 78 ist magnetisiert und arbeitet mit einem Antriebsmagneten 82 zusammen, der verschiebbar auf der Außenseite des Anschlußstutzens 16 angeordnet ist und mit dem Abtriebsteil eines schematisch wiedergegebenen Linearantriebes 84 verbunden ist. Letzterer wird wieder durch den Diskriminator 50 gesteuert, ähnlich wie obenstehend für das Magnetventil 48 beschrieben.

Beim Ausführungsbeispiel nach Figur 4 besteht das Steuerelement 38 aus zwei axial hintereinanderliegend drehbar im Einlaßkanal 14 gelagerten Steuerscheiben 38c, 38d, welche jeweils mit Fenstern 86c, 86d ausgebildet sind, die sich über etwas weniger als 90 erstrecken. Zwischen den Fenstern 86c und 86d verbleiben Stege 88c, 88d, die sich über etwas mehr als 90 erstrecken. Die Steuerscheibe 38d ist durch eine Rippe 90 auf der Innenwand des Einlaßkanales 14 drehfest angeordnet, während sich die Steuerscheibe 38c frei drehen kann. In den Stegen 88d ist jeweils eine Drosselöffnung 92 vorgesehen, so daß in der in der Zeichnung wiedergegebenen Drosselstellung des Steuerelementes 38 durch die Drosselöffnungen 92 scharfe Flüssigkeitsstrahlen gegen das Flügelrad gerichtet werden.

Zum Verstellen der Steuerscheibe 38c ist diese aus wiederum in geeigneter Richtung magnetisiertem Material hergestellt und arbeitet mit einem passenden ringförmigen Antriebsmagneten 94 zusammen. Dieser ist auf seiner Außenseite mit einem Zahnkranz versehen und kämmt mit einem Ritzel 96, das von einem Elektromotor 98 angetrieben wird. Letzterer wird wieder vom Diskriminator 50 her gesteuert und trägt den Lagefühler 36.

Den oben beschriebenen Ausführungsbeispielen ist gemeinsam, daß dem Flügelrad bei fehlendem oder kleinem Durchsatz die zu messende Flüssigkeit über eine Verengung des Einlaßkanales und damit mit höherer Geschwindigkeit zugeführt wird, während der Einlaßkanal für große Durchsätze weiten Querschnitt hat.

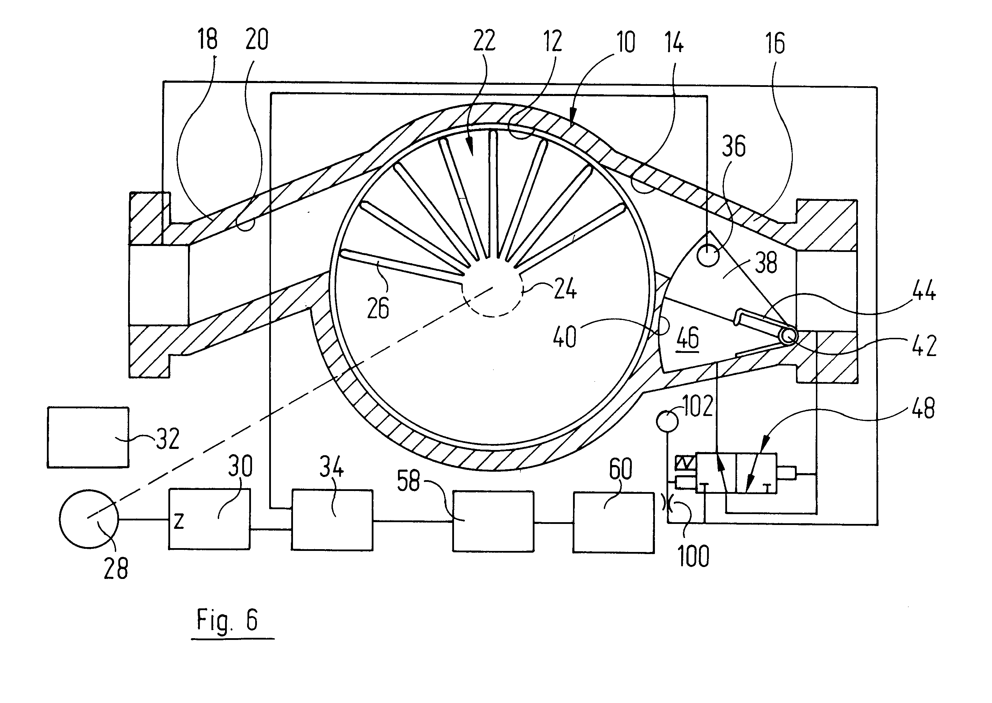

Bei dem Volumendurchflußmesser nach Figur 6 sind mechanische und elektronische Teile, die obenstehend schon beschrieben wurden, wieder mit denselben Bezugszeichen versehen.

Die Ansteuerung des Schaltventiles 48 erfolgt nun nicht mehr elektrisch sondern fluidisch, wozu die Betätigungsmagneten durch entsprechende fluidische Stellglieder ersetzt sind. Letztere sind in der aus der Zeichnung ersichtlichen Art und Weise mit dem am Einlaß bzw. Auslaß des Volumendurchflußmessers herrschenden Drucken beaufschlagt. Zusätzlich ist das Steuerglied des Schaltventiles 48 durch eine Feder in die in der Zeichnung wiedergegebene Stellung vorgespannt.

Das in der Zeichnung links gelegene hydraulische Stellglied des Schaltventiles 48 wird über eine Drossel 100 mit dem entsprechenden Steuerdruck beaufschlagt, und an dieses Stellglied ist ferner ein hydraulischer Akkumulator 102 angeschlossen. Auf diese Weise arbeitet das Schaltventil 48 mit Hysterese, und man erhält insgesamt ein ähnliches Arbeiten des Volumendurchflußmessers wie beim Ausführungsbeispiel nach Figur 1.

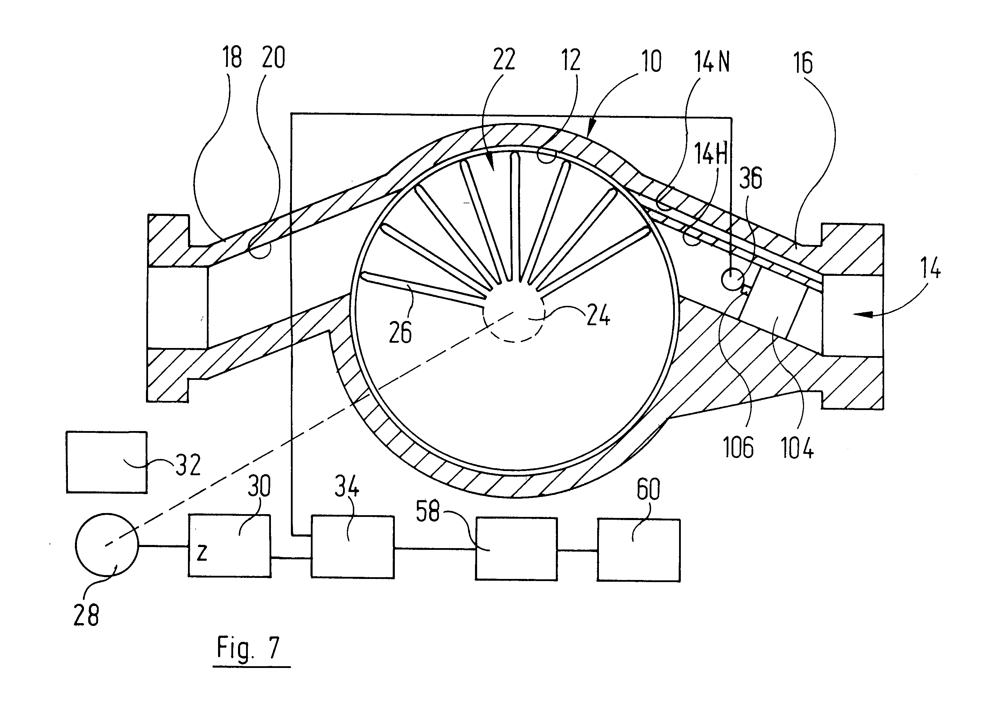

Bei dem in Figur 7 dargestellten Volumendurchflußmesser ist der Einlaßkanal 14 unterteilt in einen großen Durchmesser aufweisenden Hochdurchsatzzweig 14H sowie einen hierzu parallelen, kleinen Querschnitt aufweisenden Niederdurchsatzzweig 14N. Letzterer läuft im wesentlichen tangential auf das Flügelrad 22 zu und gibt einen scharfen Flüssigkeitsstrahl ab, was das Anlaufen des Flügelrades und das Indrehunghalten des Flügelrades bei kleinen Durchsätzen erleichtert.

Im Hochdurchsatzzweig 14H ist ein Schaltventil 104 angeordnet, welches im einzelnen einen Aufbau aufweisen kann, wie er in der DE 31 24 371 C1 im einzelnen beschrieben ist. Das bewegbare Steuerglied des Schaltventiles 104 trägt einen Ansatz 106, der mit dem Lagefühler 36 zusammenarbeitet. Das Schaltventil 104 hat eine Hysteresecharakteristik. Bei nur kleinem Durchsatz durch den Einlaßkanal 14 versperrt es den Hochdurchsatzzweig 14H vollständig und das gesamte zu messende Flüssigkeitsvolumen wird über den Niederdurchsatzzweig 14N dem Flügelrad 22 zugeführt. Steigt der Durchsatz über einen vorgegebenen Wert an, was sich in einem entsprechenden Druckabfall am Schaltventil 104 niederschlägt, so öffnet das Schaltventil schlagartig und ab diesem Zeitpunkt steht dann der volle Durchströmquerschnitt des Hochdurchsatzzweiges 14H zur Verfügung. Über das Ausgangssignal des Lagefühlers 36 wird der jeweils zu verwendende Kennliniensatz im Festwertspeicher 34 adressiert.

## Patentansprüche

1. Volumendurchflußmesser, mit einem Gehäuse (10), in welchem eine Meßkammer (12), ein zu dieser führender Einlaßkanal (14) sowie ein von dieser wegführender Auslaßkanal (20) ausgebildet sind, mit einem in der Meßkammer (12) umlaufenden Flügelrad (22), mit einem mit dem Flügelrad (22) zusammenarbeitenden Stellungsgeber (28) und mit einer mit dem Ausgangssignal des letzteren beaufschlagten Auswerteeinheit (30 bis 34), welche einen Umsetzkreis (30) aufweist, der aus dem Fühlerausgangssignal ein der Ist-Geschwindigkeit des Flügelrades (22) zugeordnetes digitales Geschwindigkeitssignal berechnet, und einen Festwertspeicher (34) aufweist, in welchem für verschiedene Geschwindigkeitssignale die jeweils einem Winkelinkrement des Flügelrades (22) zugeordneten Elementarvoluminasignale abgelegt sind und der mit einem ersten Adreßteil in Abhängigkeit von dem digitalen Geschwindigkeitssignal und in einem zweiten Adreßteil in Abhängigkeit von einem Selektionssignal adressiert wird, dadurch gekennzeichnet, daß dem Einlaßkanal (14) mindestens ein seinen Durchströmquerschnitt beeinflussendes Steuerelement (38) zugeordnet ist, daß ein auf das Steuerelement (38) arbeitender Stellmotor (38, 46; 70; 84; 98) in Abhängigkeit vom digitalen Geschwindigkeitssignal oder dem vom Festwertspeicher (34) bereitgestellten Durchsatzsignal durch einen Diskriminator (50) aktiviert wird, und daß der zweite Adreßteil für den Festwertspeicher (34) in Abhängigkeit vom Ausgangssignal des Diskriminators (50) oder eines mit dem Steuerelement (38) zusammenarbeitenden Lagefühlers (36) erstellt wird.

2. Volumendurchflußmesser, mit einem Gehäuse (10), in welchem eine Meßkammer (12), ein zu dieser führender Einlaßkanal (14) sowie ein von dieser wegführender Auslaßkanal (20) ausgebildet sind, mit einem in der Meßkammer (12) umlaufenden Flügelrad (22), mit einem mit dem Flügelrad (22) zusammenarbeitenden Stellungsgeber (28) und mit einer mit dem Ausgangssignal des letzteren beaufschlagten Auswerteeinheit (30 bis 34), welche einen Umsetzkreis (30) aufweist, der aus dem Fühlerausgangssignal ein der Ist-Geschwindigkeit des Flügelrades (22) zugeordnetes digitales Geschwindigkeitssignal berechnet, und einen Festwertspeicher (34) aufweist, in welchem für verschiedene Geschwindigkeitssignale die jeweils einem Winkelinkrement des Flügelrades (22) zugeordneten Elementarvoluminasignale abgelegt sind und der mit einem ersten Adreßteil in Abhängigkeit von dem digitalen Geschwindigkeitssignal und in einem zweiten Adreßteil in Abhängigkeit von einem Selektionssignal adressiert wird, dadurch gekennzeichnet, daß dem Einlaßkanal (14) mindestens ein seinen Durchströmquerschnitt beeinflussendes Steuerelement (38) zugeordnet ist, daß ein auf das Steuerelement (38) arbeitender Stellmotor (38, 46; 70; 84; 98) in Abhängigkeit vom Unterschied zwischen den im Einlaßkanal (14) und Auslaßkanal (20) herrschenden Drukken über ein Hystereseglied (100, 102) aktiviert wird und daß der zweite Adreßteil für den Festwertspeicher (34) in Abhängigkeit vom Ausgangssignal eines mit dem Steuerelement (38) zusammenarbeitenden Lagefühlers (36) erstellt wird.

3. Volumendurchflußmesser nach Anspruch 2, dadurch gekennzeichnet, daß der Einlaßkanal (14) in einen Hochdurchsatzzweig (14H) sowie einen vorzugsweise hierzu parallelen, gegenüber dem Hochdurchsatzzweig kleinen Querschnitt aufweisenden Niederdurchsatzzweig (14N) unterteilt ist und daß das bewegbare Steuerelement Teil eines mit Hysterese schaltenden Schaltventiles (104) ist, welches im Hochdurchsatzzweig (14H) angeordnet ist.

4. Volumendurchflußmesser nach einem der Ansprüche 1 bis 3, dadurch gekennzeichnet, daß das bewegbare Steuerelement (38) zwischen einer bündig in einer Wand des Einlaßkanales (14) sitzenden Ruhestellung und einer in den Einlaßkanal (14) ragenden Drosselstellung verschwenkbar (42) ist.

5. Volumendurchflußmesser nach einem der Ansprüche 1 bis 3, dadurch gekennzeichnet, daß das bewegbare Steuerelement (38) eine dünne Steuerscheibe mit einer vorzugsweise mittigen Drosselöffnung (64) ist, welches um eine senkrecht zwischen einer parallel zur Strömungsrichtung stehenden Ruhestellung und einer senkrecht zur Strömungsrichtung stehenden Drosselstellung verdrehbar (62) ist.

6. Volumendurchflußmesser nach einem der Ansprüche 1 bis 3, dadurch gekennzeichnet, daß das bewegbare Steuerelement (38) elastisch aus einer Ruhestellung, in welcher es im wesentlichen bündig mit einer Wand des Einlaßkanales (14) verläuft, in eine Drosselstellung ausknickbar ist, in welcher es in den Einlaßkanal (14) hineinragt, und daß eines der enden der Steuerelementes (38) an einer Gehäuseschulter (74) abgestützt ist und sein zweites Ende an einem beweglichen Betätigungsteil (78) abgestützt ist.

7. Volumendurchflußmesser nach Anspruch 6, dadurch gekennzeichnet, daß an dem Betätigungsteil (78) zwei elastisch ausknickbare Steuerelemente (38a, 38b) symmetrisch zur Mittelebene des Einlaßkanales (14) angeordnet abgestützt sind.

8. Volumendurchflußmesser nach Anspruch 6 oder 7, dadurch gekennzeichnet, daß die Steuerelemente (38a, 38b) blattfederähnlich ausgebildet sind und mit ihren Enden verkippbar in Nuten (74, 76) des Gehäuses (10) bzw. des Betätigungsteiles (78) einsitzen.

9. Volumendurchflußmesser nach einem der Ansprüche 1 bis 3, dadurch gekennzeichnet, daß das bewegbare Steuerelement (38) ein hülsenförmiges gummielastisches Element ist, dessen eine Stirnfläche an einer Gehäuseschulter und dessen andere Stirnfläche an einem bewegbaren Betätigungsteil (78) abgestützt ist.

10. Volumendurchflußmesser nach einem der Ansprüche 1 bis 3, dadurch gekennzeichnet, daß das bewegbare Steuerelement (38) eine in einer senkrecht auf der Achse des Einlaßkanales (14) stehenden Ebene drehbar gelagerte Steuerscheibe (38c) aufweist, welche in Umfangsrichtung verteilt Durchlaßöffnungen (86c) und dazwischenliegende Sperrstege (88c) aufweist, und daß dieser drehbaren Steuerscheibe (38c) eine feststehende (90) Steuerscheibe (38d) axial benachbart ist, diese vorzugsweise im Gleitspiel berührt, welche unter gleicher Winkelteilung angeordnete Durchlaßöffnungen (86d) und Sperrstege (88d) aufweist.

11. Volumendurchflußmesser nach Anspruch 10, dadurch gekennzeichnet, daß die Sperrstege (88d) mindestens einer der beiden Steuerscheiben (38d) mit jeweils mindestens einer Drosselöffnung (92) versehen sind.

12. Volumendurchflußmesser nach einem der Ansprüche 1 bis 11, dadurch gekennzeichnet, daß der auf das bewegbare Steuerelement (38) arbeitende Stellmotor ein Hydromotor ist, dessen einer Arbeitsraum (46) über ein in Abhängigkeit vom Ausgangssignal des Diskriminators (50) geschaltetes Servoventil (48) wahlweise mit dem Einlaßkanal (14) bzw. dem Auslaßkanal (20) verbindbar ist.

13. Volumendurchflußmesser nach einem der Ansprüche 1 bis 11, dadurch gekennzeichnet, daß der Stellmotor (70; 84; 98) über eine Magnetkupplung (66; 82; 94) am bewegbaren Steuerelement (38) angreift.

14. Volumendurchflußmesser nach einem der Ansprüche 1 bis 13, dadurch gekennzeichnet, daß der Diskriminator (50) eine Fensterdiskriminator ist.

15. Volumendurchflußmesser nach Anspruch 14 , dadurch gekennzeichnet, daß sich die im Festwertspeicher (34) abgelegten Geschwindigkeitssignal-Kennliniensätze überlappen.
